# EUROPÄISCHE PATENTSCHRIFT

(11) **EP 3 698 961 B1**
(45) Veröffentlichungstag und Bekanntmachung des Hinweises auf die Patenterteilung: **12.07.2023**
(21) Anmeldenummer: 20155546.3
(22) Anmeldetag: 05.02.2020
(51) Int. Cl.: B32B 1/08, B32B 5/02, B32B 7/022, B32B 27/08, B32B 27/12, F16L 11/08, F16L 11/12

(54) **SCHLAUCHLEITUNG, INSBESONDERE FÜR TRINKWASSERANWENDUNGEN**
HOSE, IN PARTICULAR FOR DRINKING WATER APPLICATIONS
CONDUITE SOUPLE, EN PARTICULIER POUR APPLICATIONS D'EAU POTABLE

(30) Priorität: 19.02.2019 DE 202019100919 U
(43) Veröffentlichungstag der Anmeldung: 26.08.2020
(73) Patentinhaber: REHAU Industries SE & Co. KG, 95111 Rehau (DE)
(72) Erfinder: Biedermann, Armin, 95131 Scharzenbach am Wald (DE); Gareis, Annalena, 95355 Presseck (DE); Müller, Jörg, 95028 Hof (DE); Wazlawik, Klaus, 95030 Hof (DE); Zahn, Cornelia, 96047 Bamberg (DE)

(56) Entgegenhaltungen:
- EP-B1- 2 032 352
- DE-A1-102004 031 923
- DE-U1-202010 006 308
- DE-U1-202013 103 183
- DE-U1-202013 104 202
- DE-U1-202013 105 199
- US-A1- 2015 252 918
- US-A1- 2017 261 132

## Beschreibung

Die Erfindung betrifft die Verwendung einer Schlauchleitung mit
- einer polymeren elastischen Schicht (1), die ein thermoplastisches Elastomer (TPE) mit einer thermoplastischen Komponente (TK) und einer elastomeren Komponente (EK) enthält,
- einer die elastische Schicht (1) umgebenden Armierungsschicht (2) und
- optional einer die Armierungsschicht (2) umgebenden äußeren Schicht (5), vorzugsweise aus polymerem Material,
- wobei an der Innenseite der elastischen Schicht (1) eine polymere Innenschicht (6) mit einer Schichtdicke (s) von 0,1 bis 0,5 mm vorgesehen ist, deren innere Oberfläche einen freien Querschnitt (A) für den Transport eines zu führenden Fluids (F) begrenzt und
- wobei die Innenschicht (6) eine Härte Shore A nach DIN EN ISO 868 von mehr als 85 aufweist, zum Transport von Trinkwasser.

Schläuche für Trinkwasser wurden früher aus Weich-PVC oder Gummimaterialien hergestellt, um die gewünschte Flexibilität sicherstellen zu können. Seit geraumer Zeit kommen jedoch spezielle Polyolefin-Materialien bzw. spezielle thermoplastische Elastomere (TPE) zum Einsatz, z.B. thermoplastische Elastomere auf Styrolbasis (TPE-S). Es können weitere Rezepturkomponenten vorgesehen sein, sowie ggf. Füllstoffe und Stabilisatoren, um die Anforderungen der von der Deutschen Trinkwasserverordnung als "allgemein anerkannte Regeln der Technik" abzuleitenden Hygienestandards "technische Regel Arbeitsblatt W 270" (DIN EN 16421 - Verfahren 2) des DVGW, sowie "Leitlinie zur hygienischen Beurteilung von anorganischen Materialien im Kontakt mit Trinkwasser (KTW-Leitlinie)" des Deutschen Umweltbundesamtes zu erfüllen.

Die DE 20 2010 006 308 U1 offenbart eine Schlauchleitung mit einer Schicht aus einem thermoplastischen Elastomer auf Styrolbasis (TPE-S). Dieser Schlauch ist für die Durchleitung von Trinkwasser geeignet und erfüllt die DVGW-Richtlinien gemäß Arbeitsblatt W 270 zur Trinkwasserverordnung von 2001. TPE-S sind thermoplastische Elastomer-Compounds, die in der Regel auf eine Polypropylen-Matrix (Homopolymer, BlockCopolymer, Random-Copolymer) basieren, in die der hydrierte Styrol-Dien-BlockCopolymer-Kautschuk (z.B. SEBS, SEPS), sowie ggf. paraffinisches Weißöl, Füllstoffe und Stabilisatoren eingebettet werden. Trinkwasserkonforme Materialien müssen allerdings ölfrei sein, um die erforderlichen Hygienestandards zu erfüllen. Zur Erringung einer ausreichenden Flexibilität muss ferner der Kautschukanteil sehr hoch dosiert sein, was wirtschaftliche Nachteile hat, aber auch verarbeitungstechnisch ungünstig ist (z.B. hohe Klebrigkeit).

Die EP 2 032 352 B1 offenbart einen flexiblen Schlauch mit den eingangs beschriebenen Merkmalen zum Transport von Nahrungsmittel-Flüssigkeiten, der eine Innenschicht aus einem TPE aufweist. Nachteilig bei diesem vorbekannten Schlauch ist allerdings, dass die TPE-Schicht aus einem vergleichsweise weichen Material besteht, dessen chemische Beständigkeit gegenüber Reinigungs- und Desinfektionsmitteln in der Regel begrenzt ist. Ferner ist die Verschmutzungsneigung aufgrund der rauen Oberfläche weicher TPE-Materialien vergleichsweise hoch. Darüber hinaus ist die geringere mechanische Stabilität einer vergleichsweise weichen TPE-Schicht während der Fertigung mittels eines Extrusionsverfahrens von Nachteil, da diese hier zum Kollabieren neigt. Ferner ist auch das weichelastische Verhalten der inneren Schlauchschicht beim Anschluss der Schlauchleitung an Anschlussarmaturen hinsichtlich der dauerhaften Dichtigkeit nachteilig.

Die DE 20 2013 103183 U1 zeigt eine Schlauchleitung mit lediglich einer Innenschicht, welche von einer Armierungsschicht umgeben ist, wobei die Innenschicht eine Härte Shore A von 60 bis 70 aufweist. Aus der DE 20 2013 105 199 ist eine eine Innenschicht aufweisende Schlauchleitung bekannt, die mit einem schraubenförmig um die Schlauchachse und die Innenschicht verlaufenden Armierungsband aus einem Kunststoff-Hartmaterial versteift ist. Die DE 2013 104 202 U1 zeigt einen armierten Kunststoff-Sanitärschlauch, der in Analogie zur vorgenannten EP 2 032 352 B1 eine Innenschicht aus einem thermoplastischen Elastomer aufweist. Die DE 10 2004 031 923 A1 offenbart einen Sanitärschlauch mit einem Innenschlauch aus Weich-PVC.

Der Erfindung liegt die Aufgabe zugrunde, eine Schlauchleitung mit den eingangs beschriebenen Merkmalen anzugeben, welche sich durch eine hohe chemische Beständigkeit auszeichnet, eine geringe Verschmutzungsneigung an ihrer inneren, mit dem zu transportierenden Fluid beaufschlagten Oberfläche aufweist und die sich darüber hinaus kostengünstig herstellen lässt.

Erfindungsgemäß wird diese Aufgabe durch die Merkmale des Patentanspruchs 1 gelöst, wobei die Innenschicht zweckmäßigerweise eine Härte Shore A von mindestens 86 oder mindestens 87 aufweist. Die Härte Shore A wird erfindungsgemäß nach DIN EN ISO 868 ermittelt (z.B. an 2 mm dicken Spritzgussplatten, 3-fach geschichtet, Ablesezeit 1 bis 3 sec). Überraschenderweise wird durch die harte polymere Innenschicht die Flexibilität der Schlauchleitung bei entsprechend geringer Schichtdicke dieser Innenschicht nicht merklich beeinträchtigt, wohingegen das hierfür eingesetzte Material der Innenschicht aufgrund der größeren Härte eine hohe chemische und auch thermische Stabilität aufweist und darüber hinaus eine vergleichsweise hohe Resistenz gegenüber Verschmutzungen aus dem zu transportierenden Fluid besitzt. Damit gelingt es beispielsweise, die beim Transport von Trinkwasser durchaus relevante Beständigkeit gegenüber Chlor im Trinkwasser zu verbessern und gleichzeitig aufgrund der hohen chemischen Stabilität die Desinfektionsmöglichkeiten zu erweitern. Dies ist insbesondere bei Anwendungen in Krankenhäusern von Bedeutung. Ein zusätzlicher Vorteil ergibt sich daraus, dass die harte Innenschicht während des Herstellungsverfahrens der Schlauchleitung mittels Extrusion eine stabilisierende Wirkung besitzt und somit die Kollabierneigung des Schlauches während seiner Herstellung verringert. Weitere Vorteile der harten Innenschicht sind aufgrund ihrer glatten Innenoberfläche ein verbessertes Durchflussverhalten des Fluides, insbesondere bei kleineren Schlauchabmessungen. Dies äußert sich beispielsweise auch in einem geringeren Fließgeräusch. Zusätzlich wird das mechanische Verhalten des Schlauches im Einbindebereich von Sanitärarmaturen (wie z.B. Gewindeanschlussstücken o. dergl.) aufgrund der hohen Oberflächengüte der erfindungsgemäßen Innenschicht verbessert.

Zweckmäßigerweise enthält die Innenschicht ein TPE und/oder ein Polyolefin (vorzugsweise ein Ethylen- oder Propylen-Homopolymer) und/oder ein Polyolefin-Copolymer (vorzugsweise ein Ethylen- oder Propylen-Copolymer) bzw. besteht daraus. Im Falle eines Polyolefin-Copolymers enthält dieses vorzugsweise Alpha-Olefine und/oder Vinylacetat-Comonomere und/oder Alkylacrylat-Comonomere.

Vorzugsweise weist die Innenschicht eine Härte Shore A von mehr als 85 bis 90, z.B. 87 bis 90 auf. Zweckmäßigerweise ist die Härte Shore Ader Innenschicht mindestens 3, vorzugsweise mindestens 5 höher als die Härte Shore A der elastischen Schicht. Wenn beispielsweise also die Härte Shore Ader Innenschicht 86 beträgt, so weist in diesem Fall die elastische Schicht dann eine Härte Shore A von maximal 81 auf.

Die Innenschicht ist vergleichsweise dünn und weist erfindungsgemäß eine Schichtdicke von 0,1 bis 0,5 mm, vorzugsweise 0,2 bis 0,4 mm, auf. Die Armierungsschicht kann, vorzugsweise diagonal gewickelte und/oder geflochtene, Filamente aufweisen.

Gemäß einer bevorzugten Ausführungsform der Erfindung beträgt der Gewichtsanteil der elastischen Komponente (EK) in der elastischen Schicht 50 bis 90 Gew.-%, vorzugsweise 60 bis 80 Gew.-%. Vorzugsweise enthält die elastische Komponente (EK) SEBS und/oder SEPS, EPDM oder polyolefine Elastomere bzw. besteht daraus. Zweckmäßigerweise ist die thermoplastische Komponente (TK) frei von PVC und enthält vorzugsweise ein Polyolefin, insbesondere PP oder PE bzw. besteht daraus. Grundsätzlich liegt es im Rahmen der Erfindung, dass das TPE ein unvernetztes oder aber auch ein vernetztes TPE ist.

Die Innenschicht kann je nach Bedarf zusätzlich Stabilisatoren, z.B. chemische Stabilisatoren und/oder Thermostabilisatoren und/oder UV-Stabilisatoren enthalten.

Die polymeren Schichten werden zweckmäßigerweise mittels eines Polymerverarbeitungsverfahren, insbesondere mittels Extrusion hergestellt. Im Rahmen der Erfindung liegt hierbei insbesondere, dass die elastische Schicht und die Innenschicht coextrudiert sind.

Im Folgenden wird die Erfindung anhand einer lediglich ein Ausführungsbeispiel darstellenden Zeichnung erläutert. Es zeigen schematisch:
- Fig. 1: eine Seitenansicht eines Ausschnittes eines erfindungsgemäßen Schlauches und
- Fig. 2: einen Querschnitt durch den in Fig. 1 dargestellten Schlauch.

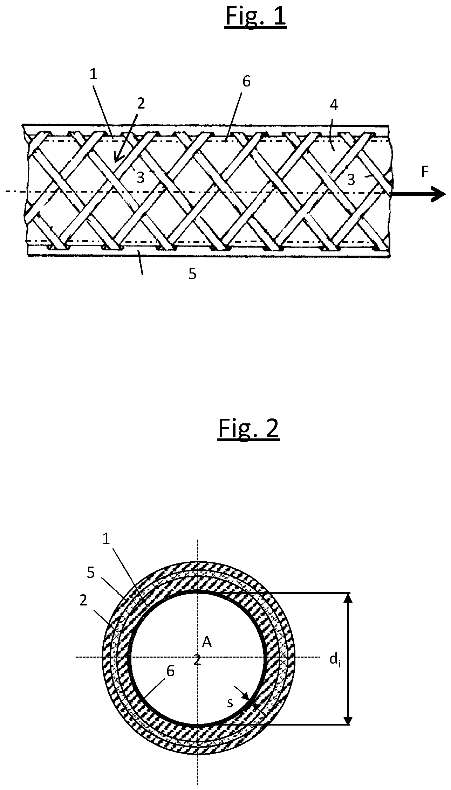

In Fig. 1 ist eine Schlauchleitung, z.B. in Form eines Brauseschlauches dargestellt, welcher zum Transport von Trinkwasser F im Sanitärbereich eingesetzt wird. Der Schlauch weist eine polymere elastische Schicht 1 aus einem thermoplastischen Elastomer (TPE) mit einer thermoplastischen Komponente (TK genannt) und einer elastomeren Komponente (EK genannt) auf. Die elastische Schicht 1 ist von einer Armierungsschicht 2 umgeben, die aus geflochtenen Fäden 3 besteht. Im Ausführungsbeispiel ist die Armierungsschicht 2 offen gestaltet, d.h. zwischen den einzelnen sich überkreuzenden Fäden 3 verbleiben Freiräume 4, so dass die Sanitärschlauchleitung bei innerer Druckbelastung "atmen" kann. Die Armierungsschicht 2 ist von einer polymeren äußeren Schicht 5 umgeben, welche die Außenschicht der Sanitärschlauchleitung bildet und eine Schutzschicht für die Armierungsschicht 2 bildet. Im Ausführungsbeispiel ist die äußere Schicht 5 transparent ausgebildet.

Wie insbesondere der Fig. 2 zu entnehmen ist, ist an der Innenseite der elastischen Schicht 1 eine polymere Innenschicht 6 vorgesehen, deren innere Oberfläche einen freien Querschnitt A für den Transport eines zu führenden Fluids F begrenzt. Diese Innenschicht 6 weist eine Härte Shore A von > 85, z.B. 86 bis 90 auf. Die Innenschicht 6 besteht im Ausführungsbeispiel aus einem TPE, einem Polyolefin (z.B. einem Ethylen- oder Propylen-Homopolymer), oder einem Polyolefin-Copolymer (z.B. einem Ethylen- oder Propylen-Copolymer). Im Falle eines Polyolefin-Copolymers kann dieses Alpha-Olefine und/oder Vinylacetat-Comonomere und/oder Alkylacrylat-Comonomere enthalten. Die Härte Shore A der Innenschicht 6 ist ferner mindestens 5 höher ist als die Härte Shore A der elastischen Schicht 1; beispielsweise beträgt bei einer Härte Shore Ader Innenschicht 6 von 87 die Härte Shore A der elastischen Schicht 1 maximal 82.

Der Gewichtsanteil der elastischen Komponente EK in der elastischen Schicht 1 beträgt im Ausführungsbeispiel 60 bis 80 Gew.-%, wobei die Komponente EK aus z.B. SEBS und/oder SEPS, EPDM oder polyolefinen Elastomeren besteht. Die thermoplastische Komponente TK ist frei von PVC und besteht z.B. aus einem Polyolefin, insbesondere PP oder PE. Die Innenschicht 6 enthält zusätzlich Stabilisatoren, z.B. chemische Stabilisatoren und/oder Thermostabilisatoren und/oder UV-Stabilisatoren. Insgesamt besteht somit die dargestellte Sanitärschlauchleitung aus den vier Schichten 1, 2, 5, 6. Die Sanitärschlauchleitung kann endseitig an eine nicht näher dargestellte Schlaucharmatur angeschlossen werden.

Die Innenschicht 6 weist im Ausführungsbeispiel eine Schichtdicke s von 0,2 bis 0,4 mm auf und besitzt einen den freien Strömungsquerschnitt Ader Sanitärschlauchleitung definierenden Innendurchmesser dᵢ von 11,5 bis 13 mm. Der Fig. 2 ist zu entnehmen, dass die Innenschicht 6 direkt an die Innenseite der elastischen Schicht 1 angrenzt. Im Ausführungsbeispiel ist die Innenschicht 6 mit der elastischen Schicht 1 coextrudiert und auch die Außenschicht 5 wird ebenfalls mit Hilfe eines Extrusionsverfahrens hergestellt.

## Patentansprüche

1. Verwendung einer Schlauchleitung mit
- einer polymeren elastischen Schicht (1), die ein thermoplastisches Elastomer (TPE) mit einer thermoplastischen Komponente (TK) und einer elastomeren Komponente (EK) enthält,
- einer die elastische Schicht (1) umgebenden Armierungsschicht (2) und
- optional einer die Armierungsschicht (2) umgebenden äußeren Schicht (5), vorzugsweise aus polymerem Material,
- wobei an der Innenseite der elastischen Schicht (1) eine polymere Innenschicht (6) mit einer Schichtdicke (s) von 0,1 bis 0,5 mm vorgesehen ist, deren innere Oberfläche einen freien Querschnitt (A) für den Transport eines zu führenden Fluids (F) begrenzt und
- wobei die Innenschicht (6) eine Härte Shore A von mehr als 85 aufweist, ermittelt nach DIN EN ISO 868 (z.B. an 2 mm dicken Spritzgussplatten, 3-fach geschichtet, Ablesezeit 1 bis 3 sec.), zum Transport von Trinkwasser.

2. Verwendung nach Anspruch 1, **dadurch gekennzeichnet, dass** die Innenschicht (6)
- ein TPE und/oder
- ein Polyolefin, vorzugsweise ein Ethylen- oder Propylen-Homopolymer, und/oder
- ein Polyolefin-Copolymer, vorzugsweise ein Ethylen- oder Propylen-Copolymer
enthält.

3. Verwendung nach Anspruch 2, **dadurch gekennzeichnet, dass** das Polyolefin-Copolymer Alpha-Olefine und/oder Vinylacetat-Comonomere und/oder Alkylacrylat-Comonomere enthält.

4. Verwendung nach einem der Ansprüche 1 bis 3, **dadurch gekennzeichnet, dass** die Innenschicht (6) eine Härte Shore A von > 85 bis 90 aufweist.

5. Verwendung nach einem der Ansprüche 1 bis 4, **dadurch gekennzeichnet, dass** die Härte Shore Ader Innenschicht (6) mindestens 3, vorzugsweise mindestens 5 höher ist als die Härte Shore A der elastischen Schicht (1).

6. Verwendung nach einem der Ansprüche 1 bis 5, **dadurch gekennzeichnet,**
**dass** die Innenschicht (6) eine Schichtdicke (s) von 0,2 bis 0,4 mm aufweist.

7. Verwendung nach einem der Ansprüche 1 bis 6, dass die Armierungsschicht (6), vorzugsweise diagonal gewickelte und/oder geflochtene, Filamente (3) aufweist.

8. Verwendung nach einem der Ansprüche 1 bis 7, **dadurch gekennzeichnet, dass** der Gewichtsanteil der elastomeren Komponente (EK) in der elastischen Schicht 50 bis 90 Gew.-%, vorzugsweise 60 bis 80 Gew.-% beträgt.

9. Verwendung nach einem der Ansprüche 1 bis 8, **dadurch gekennzeichnet, dass** die elastomere Komponente (EK) SEBS und/oder SEPS, EPDM oder polyolefine Elastomere enthält.

10. Verwendung nach einem der Ansprüche 1 bis 9, **dadurch gekennzeichnet, dass** die thermoplastische Komponente (TK) frei von PVC ist und vorzugsweise ein Polyolefin, insbesondere PP oder PE enthält und insbesondere das TPE vernetzt oder unvernetzt ist.

11. Verwendung nach einem der Ansprüche 1 bis 10, **dadurch gekennzeichnet, dass** die Innenschicht (6) zusätzlich Stabilisatoren, z.B. Thermostabilisatoren und/oder UV-Stabilisatoren enthält.

12. Verwendung nach einem der Ansprüche 1 bis 11, **dadurch gekennzeichnet, dass** die polymeren Schichten (1, 5, 6) mittels eines Polymerverarbeitungsverfahren, insbesondere mittels Extrusion hergestellt sind.

13. Verwendung nach Anspruch 12, **dadurch gekennzeichnet, dass** die elastische Schicht (1) und die Innenschicht (6) coextrudiert sind.

## Claims

1. Use of a hose having
- a polymer elastic layer (1), which contains a thermoplastic elastomer (TPE) having a thermoplastic component (TK) and an elastomer component (EK),
- a reinforcing layer (2) surrounding the elastic layer (1) and
- optionally an outer layer (5) surrounding the reinforcing layer (2), preferably made from polymer material,
- wherein the inner side of the elastic layer (1) is provided with a polymer inner layer (6) having a layer thickness (s) of 0.1 to 0.5 mm, the inner surface of which delimits a free cross-section (A) for the transport of a fluid (F) to be conducted and
- wherein the inner layer (6) has a Shore A hardness of more than 85, determined according to DIN EN ISO 868 (e.g. on 2 mm dense injection moulding plates, 3 layers, reading time 1 to 3 sec.),
for the transport of drinking water.

2. Use according to claim 1, **characterised in that** the inner layer (6) contains
- a TPE and/or
- a polyolefin, preferably an ethylene or propylene homopolymer, and/or
- a polyolefin copolymer, preferably an ethylene or propylene copolymer.

3. Use according to claim 2, **characterised in that** the polyolefin copolymer contains alphaolefins and/or vinyl acetate comonomers and/or alkyl acrylate comonomers.

4. Use according to any one of claims 1 to 3, **characterised in that** the inner layer (6) has a Shore A hardness of > 85 to 90.

5. Use according to any one of claims 1 to 4, **characterised in that** the Shore A hardness of the inner layer (6) is at least 3, preferably at least 5 times greater than the Shore A hardness of the elastic layer (1).

6. Use according to any one of claims 1 to 5, **characterised in that** the inner layer (6) has a layer thickness (s) of 0.2 to 0.4 mm.

7. Use according to any one of claims 1 to 6, **characterised in that** the reinforcing layer (6) has, preferably diagonally wound and/or braided, filaments (3).

8. Use according to any one of claims 1 to 7, **characterised in that** the proportion by weight of the elastomer component (EK) in the elastic layer is 50 to 90 wt%, preferably 60 to 80 wt%.

9. Use according to any one of claims 1 to 8, **characterised in that** the elastomer component (EK) contains SEBS and/or SEPS, EPDM or polyolefin elastomers.

10. Use according to any one of claims 1 to 9, **characterised in that** the thermoplastic component (TK) is free of PVC and preferably contains a polyolefin, in particular PP or PE and in particular the TPE is cross-linked or non-cross-linked.

11. Use according to any one of claims 1 to 10, **characterized in that** the inner layer (6) additionally contains stabilizers, e.g. thermal stabilizers and/or UV-stabilizers.

12. Use according to any one of claims 1 to 11, **characterized in that** the polymer layers (1, 5, 6) are produced by means of a polymer processing process, in particular by means of extrusion.

13. Use according to claim 12, **characterized in that** the elastic layer (1) and the inner layer (6) are coextruded.

## Revendications

1. Utilisation d'une conduite flexible avec
- une couche élastique polymère (1), qui contient un élastomère thermoplastique (TPE) avec un composant thermoplastique (TK) et un composant élastomère (EK),
- une couche d'armature (2) entourant la couche élastique (1), et
- en option une couche extérieure (5) entourant la couche d'armature (2), de préférence composée de matériau polymère,
- dans laquelle une couche intérieure polymère (6) avec une épaisseur de couche (s) de 0,1 à 0,5 mm est prévue sur le côté intérieur de la couche élastique (1), dont la surface intérieure délimite une section transversale libre (A) pour le transport d'un fluide (F) à guider, et
- dans laquelle la couche intérieure (6) présente une dureté Shore A de plus de 85 déterminée selon la norme DIN EN ISO 868 (par exemple sur des plaques de moulage par injection épaisses de 2 mm, stratifiées 3 fois, temps de lecture 1 à 3 sec),
pour le transport d'eau potable.

2. Utilisation selon la revendication 1, **caractérisée en ce que** la couche intérieure (6) contient
- un TPE, et/ou
- une polyoléfine, de préférence un homopolymère d'éthylène ou de propylène, et/ou
- un copolymère de polyoléfine, de préférence un copolymère d'éthylène ou de propylène.

3. Utilisation selon la revendication 2, **caractérisée en ce que** le copolymère de polyoléfine contient des alpha-oléfines et/ou des comonomères d'acétate de vinyle et/ou des comonomères d'acrylate d'alkyle.

4. Utilisation selon l'une quelconque des revendications 1 à 3, **caractérisée en ce que** la couche intérieure (6) présente une dureté Shore A > 85 à 90.

5. Utilisation selon l'une quelconque des revendications 1 à 4, **caractérisée en ce que** la dureté Shore A de la couche intérieure (6) est au moins 3 fois plus élevée, de préférence au moins 5 fois plus élevée que la dureté Shore A de la couche élastique (1).

6. Utilisation selon l'une quelconque des revendications 1 à 5, **caractérisée en ce que** la couche intérieure (6) présente une épaisseur de couche (s) de 0,2 à 0,4 mm.

7. Utilisation selon l'une quelconque des revendications 1 à 6, **caractérisée en ce que** la couche d'armature (6) présente des filaments (3) enroulés et/ou tissés de préférence de manière diagonale.

8. Utilisation selon l'une quelconque des revendications 1 à 7, **caractérisée en ce que** la proportion en poids du composant élastomère (EK) dans la couche élastique va de 50 à 90 % en poids, de préférence de 60 à 80 % en poids.

9. Utilisation selon l'une quelconque des revendications 1 à 8, **caractérisée en ce que** le composant élastomère (EK) contient du SEBS et/ou du SEPS, de l'EPDM ou des élastomères polyoléfine.

10. Utilisation selon l'une quelconque des revendications 1 à 9, **caractérisée en ce que** le composant thermoplastique (TK) est exempt de PVC et contient de préférence une polyoléfine, en particulier du PP ou du PE, et en particulier le TPE est réticulé ou non réticulé.

11. Utilisation selon l'une quelconque des revendications 1 à 10, **caractérisée en ce que** la couche intérieure (6) contient en supplément des agents stabilisants, par exemple des agents thermostabilisants et/ou des stabilisants UV.

12. Utilisation selon l'une quelconque des revendications 1 à 11, **caractérisée en ce que** les couches polymères (1, 5, 6) sont fabriquées au moyen d'un procédé de traitement de polymères, en particulier au moyen d'une extrusion.

13. Utilisation selon la revendication 12, **caractérisée en ce que** la couche élastique (1) et la couche intérieure (6) sont coextrudées.
